# EUROPEAN PATENT APPLICATION

(11) **EP 4 467 355 A1**
(43) Date of publication of application: **27.11.2024**
(21) Application number: 22921988.6
(22) Date of filing: 06.09.2022
(51) Int. Cl.: B60B 17/00

(54) **WHEEL FOR RAILWAY VEHICLE**

(30) Priority: 20.01.2022 JP 2022007419
(71) Applicant: NIPPON STEEL CORPORATION, Chiyoda-ku Tokyo 100-8071 (JP)
(72) Inventor: UENISHI, Ayumi, Tokyo 100-8071 (JP); KATO, Takanori, Tokyo 100-8071 (JP); YAMAMURA, Yoshinari, Tokyo 100-8071 (JP); ABE, Shingo, Tokyo 100-8071 (JP); NOGUCHI, Jun, Tokyo 100-8071 (JP)
(74) Representative: Zimmermann & Partner Patentanwälte mbB
(86) International application number: PCT/JP2022/033349
(87) International publication number: WO 2023/139835

(57) **Abstract**

A wheel (100) includes a boss (10), a rim (20), and a web (30). A rim-width center (Cr) is positioned on a flange (22) side of the rim (20) with respect to a boss-width center (Cb). A plate-thickness center line (A) of the web (30) has a linear shape when the wheel (100) is viewed in a longitudinal section. The plate-thickness center line (A) is inclined with respect to a radial direction of the wheel (100) in such a way as to be farther from the flange (22) as the plate-thickness center line (A) extends outward in the radial direction. When a distance in an axial direction of the wheel (100) from a side face (24) of the rim (20) to an outer end (Aa) of the plate-thickness center line (A) is taken as "Pw" and a length of the rim (20) in the axial direction is taken as "Wr", Pw/Wr is less than 0.40.

## Description

### TECHNICAL FIELD

The present disclosure relates to a wheel for a railway vehicle.

### BACKGROUND ART

In general, a wheel for a railway vehicle includes a boss, a rim, and a web. An axle is to be inserted into the boss. The rim forms an outer circumferential portion of the wheel, and includes a tread and a flange. The tread is a surface that is to come into contact with a top surface of a rail. The flange is connected to one end of the tread in an axial direction of the wheel, and protrudes outward from the tread in a radial direction of the wheel. The web connects the rim and the boss.

There have been various shapes of wheels for railway vehicles. For example, Patent Literature 1 discloses a wheel in which a web is bent. In Patent Literature 1, a plate-thickness center line of the web has a substantially S shape when the wheel is viewed in its longitudinal section. The plate-thickness center line has a center that is an inflection point of the plate-thickness center line, and is symmetric about the inflection point.

Patent Literatures 2 and 3 also disclose wheels including a web that is bent. In Patent Literatures 2 and 3, a plate-thickness center line of the web has a shape that is convex on a side opposite to a flange when the wheel is viewed in its longitudinal section. The plate-thickness center line is a curve with both ends being on the flange side with respect to a midpoint of the plate-thickness center line.

### CITATION LIST

### PATENT LITERATURE

Patent Literature 1: Japanese Patent Application Publication No. 10-29401
Patent Literature 2: Japanese Translation of PCT International Application Publication No. 2009-545484
Patent Literature 3: Japanese Translation of PCT International Application Publication No. 2015-500177

### SUMMARY OF INVENTION

### TECHNICAL PROBLEM

As one type of braking device for a railway vehicle, a tread brake is known. In a tread brake, a brake shoe is pressed against a tread of a wheel to apply a brake to a railway vehicle. During braking of the railway vehicle, frictional heat is produced between the tread and the brake shoe. As a result, a temperature of a rim including the tread rises, causing heat deformation of the rim. When displacement occurs in the rim due to heat deformation, traveling stability of a railway vehicle is affected. In particular, displacement of the rim in an axial direction of the wheel may induce meandering or derailing of the railway vehicle. In addition, the heat deformation of the rim and the occurrence of thermal stress in the web during braking of the railway vehicle may cause a fatigue fracture of the wheel. It is therefore necessary to reduce the displacement of the rim in the axial direction of the wheel and to reduce thermal stress occurring in the web during braking of the railway vehicle with the tread brake. However, with conventional wheels as exemplified by Patent Literatures 1 to 3, it is difficult to reduce both displacement of a rim and thermal stress in a web that occur during braking, at the same time.

An objective of the present disclosure is to provide a wheel for a railway vehicle that can reduce a displacement of its rim in an axial direction of the wheel and a thermal stress occurring in its web at the same time during braking of the railway vehicle with a tread brake.

### SOLUTION TO PROBLEM

A wheel according to the present disclosure is a wheel for a railway vehicle. The wheel includes a boss, a rim, and a web. The boss forms an inner circumferential portion of the wheel. An axle of the railway vehicle is to be inserted into the boss. The rim forms an outer circumferential portion of the wheel. The rim includes a tread and a flange. The tread is to come into contact with a top surface of a rail on which the railway vehicle travels. The flange is connected to one end of the tread in an axial direction of the wheel, and protrudes outward from the tread in a radial direction of the wheel. A center of the rim in the axial direction of the wheel is positioned on the flange side with respect to a center of the boss in the axial direction. The web connects the boss and the rim. The web has an annular shape. A plate-thickness center line of the web has a linear shape in cross section of the wheel that includes a central axis of the wheel. The plate-thickness center line is inclined with respect to the radial direction of the wheel in such a way as to be farther from the flange as the plate-thickness center line extends outward in the radial direction. When a distance in the axial direction of the wheel from a side face of the rim to an outer end of the plate-thickness center line is taken as "Pw" and a length of the rim in the axial direction is taken as "Wr", Pw/Wr is less than 0.40. The side face of the rim is one side face of both side faces of the rim in the axial direction of the wheel, whichever is farther from the flange than the other side face. The outer end of the plate-thickness center line is one end of both ends of the plate-thickness center line, whichever is positioned more outward than the other end in the radial direction of the wheel.

### ADVANTAGEOUS EFFECTS OF INVENTION

With a wheel for a railway vehicle according to the present disclosure, it is possible to reduce a displacement of its rim in an axial direction of the wheel and a thermal stress occurring in its web at the same time during braking of the railway vehicle with a tread brake.

### BRIEF DESCRIPTION OF DRAWINGS

[FIG. 1] FIG. 1 is a longitudinal sectional view of a wheel for a railway vehicle according to an embodiment.
[FIG. 2A] FIG. 2A is a diagram illustrating wheel shapes used in numerical analysis.
[FIG. 2B] FIG. 2B is a diagram illustrating wheel shapes used in the numerical analysis.
[FIG. 2C] FIG. 2C is a diagram illustrating wheel shapes used in the numerical analysis.
[FIG. 3] FIG. 3 is a diagram illustrating wheel shapes as reference examples, which are used in the numerical analysis.
[FIG. 4] FIG. 4 is a graph illustrating the relationship between web angle θ and displacement amount of a rim in a case where web position Pw/rim width Wr and rim root R are constant.
[FIG. 5] FIG. 5 is a graph illustrating the relationship between web position Pw/rim width Wr and displacement amount of a rim in a case where web angle θ and rim root R are constant.
[FIG. 6] FIG. 6 is a graph illustrating the relationship between rim root R and displacement amount of a rim in a case where web position Pw/rim width Wr and web angle θ are constant.
[FIG. 7] FIG. 7 is a graph illustrating the relationship between web angle θ and web thermal stress in a case where web position Pw/rim width Wr and rim root R are constant.
[FIG. 8] FIG. 8 is a graph illustrating the relationship between web position Pw/rim width Wr and web thermal stress in a case where web angle θ and rim root R are constant.
[FIG. 9] FIG. 9 is a graph illustrating the relationship between rim root R and web thermal stress in a case where web position Pw/rim width Wr and web angle θ are constant.

### DESCRIPTION OF EMBODIMENTS

A wheel according to an embodiment is a wheel for a railway vehicle. The wheel includes a boss, a rim, and a web. The boss forms an inner circumferential portion of the wheel. An axle of the railway vehicle is to be inserted into the boss. The rim forms an outer circumferential portion of the wheel. The rim includes a tread and a flange. The tread is to come into contact with a top surface of a rail on which the railway vehicle travels. The flange is connected to one end of the tread in an axial direction of the wheel, and protrudes outward from the tread in a radial direction of the wheel. A center of the rim in the axial direction of the wheel is positioned on the flange side with respect to a center of the boss in the axial direction. The web connects the boss and the rim. The web has an annular shape. A plate-thickness center line of the web has a linear shape in cross section of the wheel that includes a central axis of the wheel. The plate-thickness center line is inclined with respect to the radial direction of the wheel in such a way as to be farther from the flange as the plate-thickness center line extends outward in the radial direction. When a distance in the axial direction of the wheel from a side face of the rim to an outer end of the plate-thickness center line is taken as "Pw" and a length of the rim in the axial direction is taken as "Wr", Pw/Wr is less than 0.40. The side face of the rim is one side face of both side faces of the rim in the axial direction of the wheel, whichever is farther from the flange than the other. The outer end of the plate-thickness center line is one end of both ends of the plate-thickness center line, whichever is positioned more outward than the other end in the radial direction of the wheel (first configuration).

When the brake shoe of a tread brake is pressed against the tread of a wheel, producing frictional heat, the rim may deform by heat to be displaced in the axial direction of the wheel. However, in the wheel of the first configuration, on the assumption that the center of the rim is positioned closer to the flange than the center of the boss, the linear-shaped plate-thickness center line of the web is inclined with respect to the radial direction of the wheel in such a way as to be farther from the flange as the linear-shaped plate-thickness center line extends outward in the radial direction. Such a configuration can reduce displacement of the rim in the axial direction of the wheel during braking of the railway vehicle with a tread brake. Since the plate-thickness center line has no inflection point, stress concentration is less likely to occur in the web. It is therefore possible to reduce thermal stress occurring in the web during braking of the railway vehicle with the tread brake.

Further, in the first configuration, a distance from the side face of the rim on the counter-flange side to the outer end of the plate-thickness center line of the web is relatively small. More specifically, the ratio of the distance Pw to an entire width Wr of the rim is less than 0.40. Such a configuration can further reduce displacement of the rim in the axial direction of the wheel and thermal stress occurring in the web during braking of the railway vehicle.

In the wheel according to the first configuration, Pw/Wr may be 0.30 or more (second configuration).

In the wheel according to the first or second configuration, an angle formed by the plate-thickness center line with the axial direction on a side opposite to the flange is preferably 89° or less (third configuration). The angle is 85° or more, for example (fourth configuration).

In the wheel according to any one of the first to fourth configurations, a face of the web on the flange side may be connected to a face of the rim via a connecting part having an arc shape in cross section including the central axis of the wheel. A curvature radius of the connecting part is preferably 20 mm or more (fifth configuration).

In the wheel according to any one of the first to fifth configurations, the web may have a minimum plate thickness at a position inward from the outer end of the plate-thickness center line in the radial direction. The plate thickness of the web may decrease as the web extends outward in the radial direction until the position of the minimum plate thickness (sixth configuration).

An embodiment of the present disclosure will be described below with reference to the drawings. In the drawings, the same or equivalent components will be denoted by the same reference characters and repetitive description thereof will not be made.

### [Configuration of wheel]

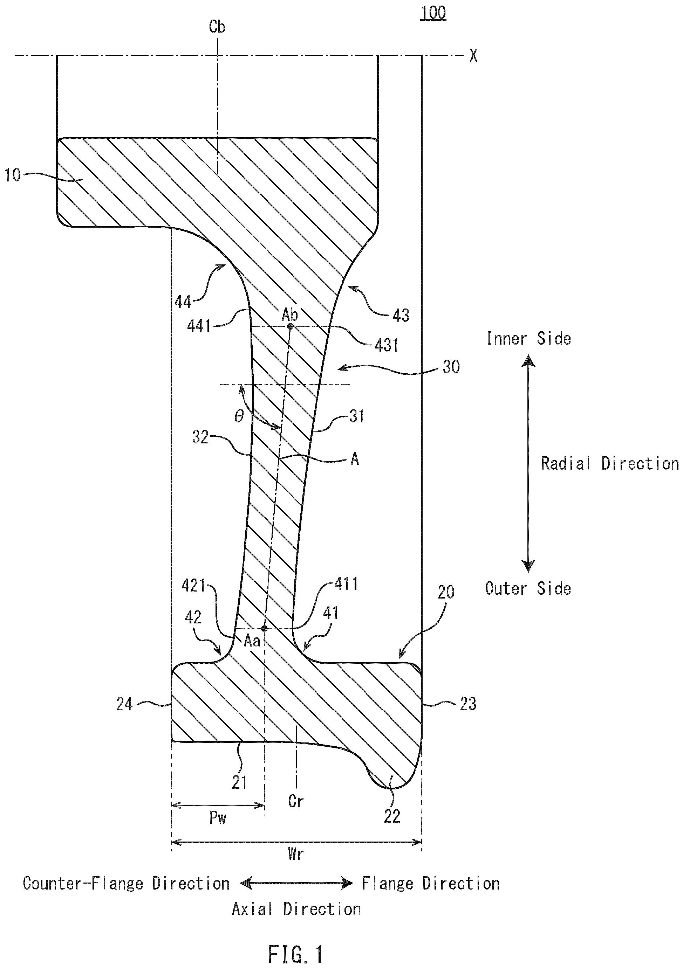

FIG. 1 is a longitudinal sectional view of a wheel 100 for a railway vehicle according to the present embodiment. The longitudinal section of the wheel 100 refers to a cross section of the wheel 100 including a central axis X. The longitudinal section of the wheel 100 is symmetric about the central axis X, and thus FIG. 1 illustrates the wheel 100 on one side of the central axis X only. In the present embodiment, a direction in which the central axis X of the wheel 100 extends is referred to as an axial direction, and a radial direction of the wheel 100 may be simply referred to as a radial direction.

Referring to FIG. 1, the wheel 100 includes a boss 10, a rim 20, and a web 30.

The boss 10 forms an inner circumferential portion of the wheel 100. The boss 10 has a substantially cylindrical shape with the central axis X as the axial centerline. An axle (not illustrated in the drawing) of the railway vehicle is to be inserted into the boss 10.

The rim 20 forms an outer circumferential portion of the wheel 100. The rim 20 includes a tread 21 and a flange 22.

The tread 21 faces outward in the radial direction of the wheel 100. The tread 21 is to come into contact with a top surface of a rail on which the railway vehicle travels. Although not particularly limited, the tread 21 may be a conical tread or an arc tread, for example.

The flange 22 protrudes outward from the tread 21 in the radial direction of the wheel 100. When the railway vehicle travels on right and left rails, the flange 22 is positioned inward from the rails. The flange 22 is connected to one end of the tread 21 in the axial direction of the wheel 100. The flange 22 is connected to one side face 23 of both side faces 23 and 24 of the rim 20 in the axial direction. The tread 21 is connected to the other side face 24 of the rim 20. Hereinafter, a direction toward the flange 22 along the axial direction will be referred to as a flange direction, and a direction opposite to the flange direction will be referred to as a counter-flange direction.

The rim 20 is positioned inward from the boss 10 in a track-width direction. More specifically, a rim-width center Cr is positioned on the flange 22 side with respect to a boss-width center Cb. The rim-width center Cr is the center of the rim 20 in the axial direction. The boss-width center Cb is the center of the boss 10 in the axial direction.

The web 30 has an annular shape with the central axis X as the axial centerline. The web 30 connects the boss 10 and the rim 20. The web 30 has a plate thickness that is smaller as a whole than lengths of the boss 10 and the rim 20 in the axial direction.

The web 30 includes side faces 31 and 32. The side face 31 is a face of the web 30 on the flange 22 side. The side face 32 is a face of the web 30 on the side opposite to the flange 22. The side faces 31 and 32 are respectively connected to faces of the rim 20 via connecting parts 41, 42. The side faces 31 and 32 are respectively connected to faces of the boss 10 via connecting parts 43 and 44.

Each of the connecting parts 41, 42, 43, and 44 has a substantially arc shape when the wheel 100 is viewed in its longitudinal section. Curvature radiuses of the connecting parts 41, 42, 43, and 44 may be suitably determined. For example, the curvature radius of the connecting part 41 that connects the side face 31 of the web 30 and the rim 20 is preferably 20 mm or more, and is more preferably 40 mm or more.

In the present embodiment, one of an end (R stop) 411 of the connecting part 41 on the web 30 side and an end (R stop) 421 of the connecting part 42 on the web 30 side that is positioned more inward than the other in the radial direction is defined to be an outer circumference end of the web 30. In addition, one of an end (R stop) 431 of the connecting part 43 on the web 30 side and an end (R stop) 441 of the connecting part 44 on the web 30 side that is positioned more outward than the other in the radial direction is defined to be an inner circumference end of the web 30. In the example illustrated in FIG. 1, the end 411 of the connecting part 41 and the end 431 of the connecting part 43 are the outer circumference end and the inner circumference end of the web 30, respectively.

The web 30 has a plate-thickness center line A. The plate-thickness center line A is a virtual line that passes midpoints of a plate thickness of the web 30 extending from the boss 10 to the rim 20 when the wheel 100 is viewed in its longitudinal section. The plate-thickness center line A passes the midpoints between the side faces 31 and 32 of the web 30 and extends from the boss 10 side to the rim 20 side.

The plate-thickness center line A has a linear shape when the wheel 100 is viewed in its longitudinal section. A linear shape herein includes not only a perfect straight line but also a very gentle arc having a curvature radius of, for example, 1000 mm or more, or even a polygonal chain. In other words, the plate-thickness center line A is any line that can be recognized as a substantially straight line when the wheel 100 is viewed in its longitudinal section. Since the plate-thickness center line A has a linear shape when the wheel 100 is viewed in its longitudinal section, the web 30 has a substantially flat disk shape and is bent in neither the flange direction nor the counter-flange direction.

The plate-thickness center line A has an outer end Aa and an inner end Ab. The outer end Aa is one end of both ends of the plate-thickness center line A, whichever is positioned more outward than the other end in the radial direction. The inner end Ab is one end of both ends of the plate-thickness center line A, whichever is positioned more inward than the other end in the radial direction. The outer end Aa is a point at which the plate-thickness center line A is connected to a virtual straight line that passes the outer circumference end 411 of the web 30 and extends in the axial direction when the wheel 100 is viewed in its longitudinal section. The inner end Ab of the plate-thickness center line A is a point at which the plate-thickness center line A is connected to a virtual straight line that passes the inner circumference end 431 of the web 30 and extends in the axial direction when the wheel 100 is viewed in its longitudinal section.

The plate-thickness center line A is inclined with respect to the radial direction in such a way as to be farther from the flange 22 as the plate-thickness center line A extends outward in the radial direction. An angle θ of the plate-thickness center line A is less than 90°. The angle θ is preferably 89° or less. The angle θ may be 85° or more.

The angle θ is an angle formed by the plate-thickness center line A with the axial direction on the side opposite to the flange 22. In a case where the plate-thickness center line A is a very gentle curve, the angle θ is determined to be an angle formed by a tangential line at a center of the plate-thickness center line A (midpoint between the outer end Aa and the inner end Ab) with the axial direction. In a case where the plate-thickness center line A is a polygonal chain, the angle θ is determined to be an angle formed by the longest line segment among line segments included in the plate-thickness center line A with the axial direction. When the plate-thickness center line A is parallel to the radial direction, the angle θ formed between the plate-thickness center line A and the axial direction is 90°. In a case where the outer end Aa of the plate-thickness center line A is disposed on the counter-flange direction side with respect to the position at which the angle θ is 90°, the angle θ is less than 90°.

The outer end Aa of the plate-thickness center line A is disposed on the counter-flange direction side with respect to the rim-width center Cr. When a length of the rim 20 in the axial direction is taken as a rim width Wr and a distance in the axial direction from the side face 24 of the rim 20 on the counter-flange side to the outer end Aa of the plate-thickness center line A is taken as a web position Pw, Pw/Wr is less than 0.40. Pw/Wr is preferably 0.30 or more.

The web 30 has its minimum plate thickness at a position inward from the outer end Aa of the plate-thickness center line A in the radial direction. The web 30 is allowed to have the minimum plate thickness at a position in the vicinity of the outer end Aa of the plate-thickness center line A. The web 30 is allowed to have the minimum plate thickness at a position 5 mm to 30 mm, for example, inward from the outer end Aa of the plate-thickness center line A in the radial direction. The plate thickness of the web 30 gradually decreases as the web 30 extends outward in the radial direction until the position of the minimum plate thickness. In other words, the plate thickness of the web 30 decreases as the web 30 extends outward in the radial direction, and is minimized at a point inward from the outer end Aa of the plate-thickness center line A. The position at which the plate thickness of the web 30 is minimized substantially coincides with the position at which bending stress that occurs in the web 30 due to a bending load received by the wheel 100 from a rail when the railway vehicle passes a curve is minimized.

### [Advantageous Effects]

When the brake shoe of a tread brake is pressed against the tread 21 of the wheel 100 during braking of the railway vehicle, the rim 20 is subjected to heat deformation by frictional heat between the tread 21 and the brake shoe, thus being displaced in the axial direction. However, with the wheel 100 according to the present embodiment, it is possible to reduce such displacement of the rim 20. In other words, in the wheel 100, on the assumption that the rim-width center Cr is disposed on the flange direction side with respect to the boss-width center Cb, the linear-shaped plate-thickness center line A of the web 30 is inclined with respect to the radial direction in such a way as to be farther from the flange 22 as the plate-thickness center line A extends outward in the radial direction. Such a configuration can reduce displacement of the rim 20 in the axial direction of the wheel 100 during braking of the railway vehicle with the tread brake. Since the plate-thickness center line A has a linear shape and has no inflection point, stress concentration is less likely to occur in the web 30. It is therefore possible to reduce thermal stress occurring in the web 30 during braking of the railway vehicle with the tread brake.

In the wheel 100 according to the present embodiment, the web position Pw is relatively small. In other words, a ratio of the web position Pw to the rim width Wr is less than 0.40, that is, the outer end Aa of the plate-thickness center line A is disposed at a position relatively far from the flange 22. Such a configuration can further reduce displacement of the rim 20 in the axial direction of the wheel 100 and thermal stress occurring in the web 30 during braking of the railway vehicle with the tread brake.

In the wheel 100 according to the present embodiment, the ratio of the web position Pw to the rim width Wr is preferably 0.30 or more. Such a configuration can further reduce thermal stress occurring in the web 30 during braking of the railway vehicle with the tread brake.

In a case where the angle θ formed by the plate-thickness center line A of the web 30 with the axial direction of the wheel 100 is 90°, the bending moment that acts on the wheel 100 becomes excessively large when the railway vehicle passes a curve, so that stress concentration is likely to occur particularly at the root of the web 30 for the boss 10. As a result, in a case where the angle θ of the plate-thickness center line A is 90°, it is difficult to ensure rigidity of the wheel 100 when the railway vehicle passes a curve. In contrast, in the wheel 100 according to the present embodiment, the angle θ formed by the plate-thickness center line A of the web 30 with the axial direction is less than 90°. Such a configuration can ensure rigidity of the wheel 100 when the railway vehicle passes a curve.

In the wheel 100 according to the present embodiment, the angle θ of the plate-thickness center line A is preferably 89° or less. Such a configuration can effectively reduce displacement of the rim 20 in the axial direction of the wheel 100 and thermal stress occurring in the web 30 while ensuring rigidity of the wheel 100 when the railway vehicle passes a curve.

The angle θ of the plate-thickness center line A is preferably 85° or more. Such a configuration can more surely reduce thermal stress in the web 30.

In the wheel 100 according to the present embodiment, the side face 31 of the web 30 on the flange 22 side is connected to the face of the rim 20 via the connecting part 41. The curvature radius of the connecting part 41 is preferably 20 mm or more. Such a configuration can further reduce displacement of the rim 20 in the axial direction of the wheel 100 during braking of the railway vehicle with the tread brake.

The curvature radius of the connecting part 41 is more preferably 40 mm or more. Such a configuration can further reduce thermal stress occurring in the web 30 during braking of the railway vehicle in addition to displacement of the rim 20.

In the present embodiment, the web 30 has the minimum plate thickness at the point inward from the outer end Aa of the plate-thickness center line A in the radial direction. More specifically, in the web 30, the position at which bending stress produced by a bending load received from a rail when the railway vehicle passes a curve is minimized is made to substantially coincide with the position at which the plate thickness is minimized. With this configuration, it is possible to prevent fatigue fracture of the web 30, increasing a life of the wheel 100.

The embodiment according to the present disclosure is described above, but the present disclosure is not limited to the above embodiment, and various modifications may be made without departing from the gist and scope of the present disclosure.

### EXAMPLES

The present disclosure will be described below more in detail with reference to Examples. However, the present disclosure should not be construed to be limited to the Examples described below.

To evaluate effects brought by a wheel for a railway vehicle according to the present disclosure, a numerical analysis by the finite element method (FEM analysis) was conducted. In the FEM analysis, an analytic model having a shape of the wheel 100 according to the above-mentioned embodiment (FIG. 1) was created, and evaluation was conducted on the analytic model while varying the angle (web angle) θ of the plate-thickness center line A relative to the axial direction of the wheel 100, web position Pw/rim width Wr, and rim root R (Nos. 1 to 17). The rim root R is a curvature radius of the connecting part 41 that connects the side face 31 of the web 30 on the flange 22 side and the face of the rim 20. For the purpose of comparison, the evaluation was also conducted on analytic models each having a wheel shape that is generally used in Europe or North America (reference examples 1 and 2).

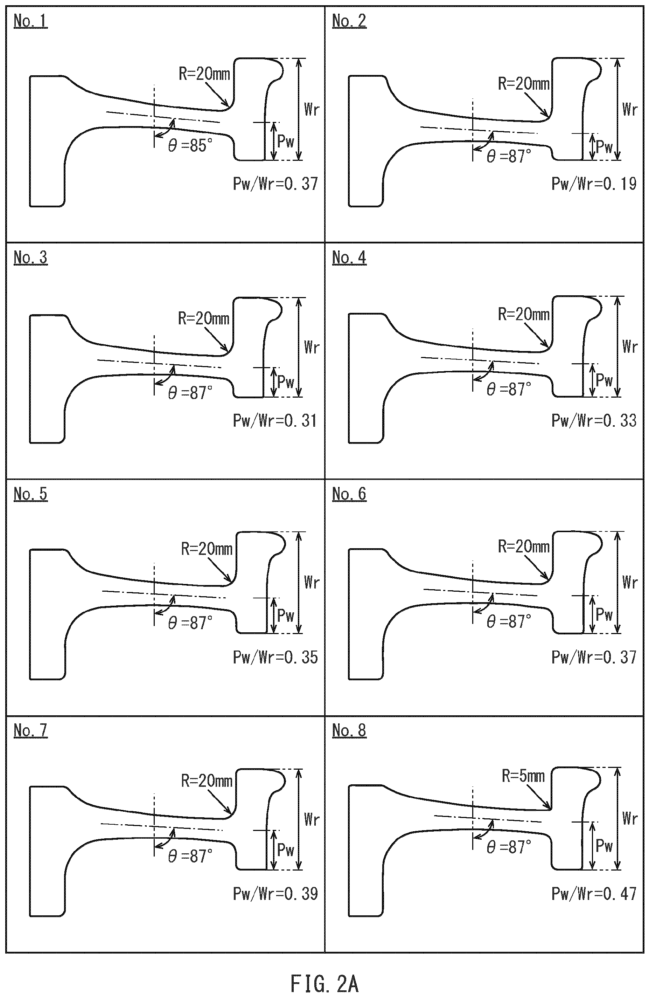

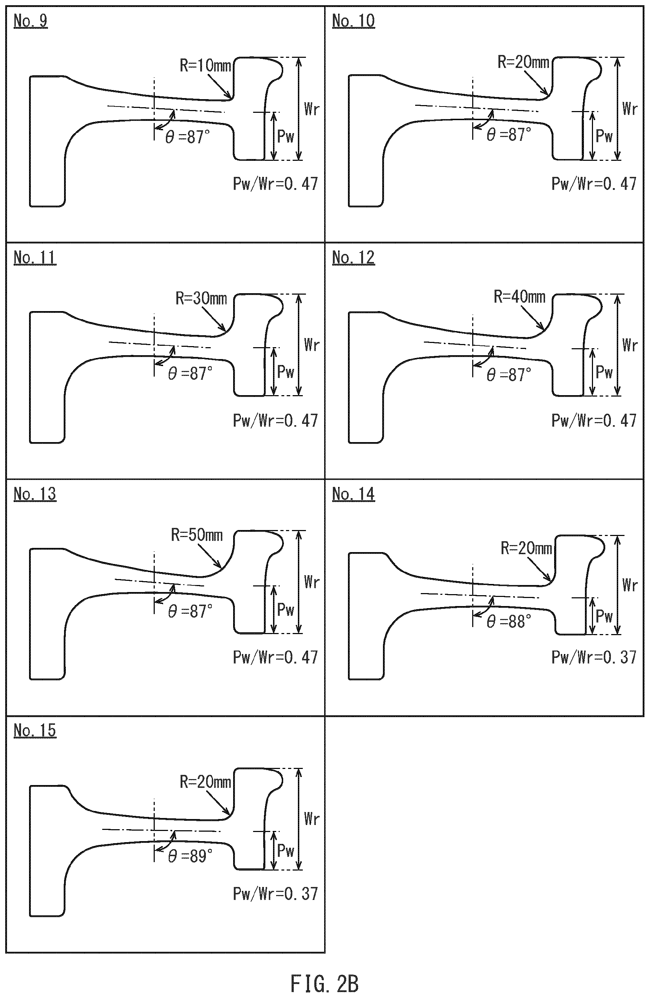

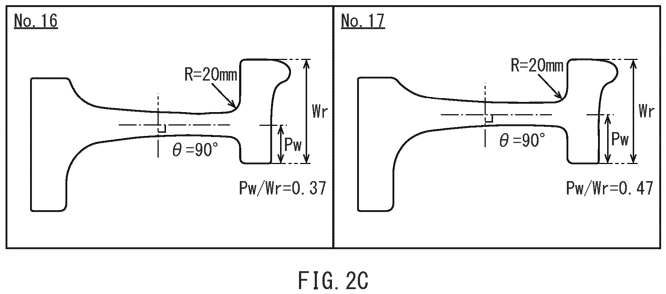

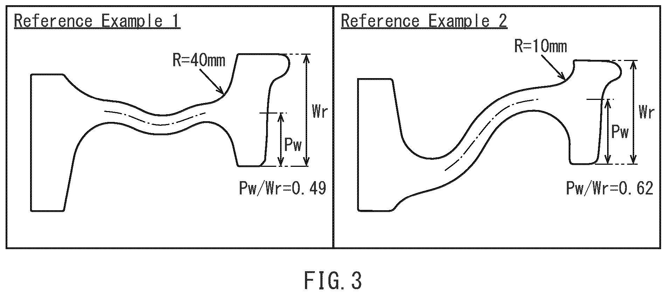

FIG. 2A, FIG. 2B, and FIG. 2C are diagrams illustrating wheel shapes (outlines in 1/2 cross section) of Nos. 1 to 17. FIG. 3 is a diagram illustrating wheel shapes (outlines in 1/2 cross section) of the reference examples 1 and 2. In each wheel shape, the rim-width center Cr is disposed on the flange direction side with respect to the boss-width center Cb.

Referring to FIG. 2A, FIG. 2B, and FIG. 2C, in each of the wheel shapes of Nos. 1 to 17, the plate-thickness center line (dashed line) of the web has a linear shape. In Nos. 1 to 15 illustrated in FIG. 2A and FIG. 2B, the plate-thickness center line is inclined with respect to the radial direction of the wheel. In contrast, in Nos. 16 and 17 illustrated in FIG. 2C, the plate-thickness center line is parallel to the radial direction of the wheel. As illustrated in FIG. 3, in the reference examples 1 and 2, different from Nos. 1 to 17, the plate-thickness center line of the web is bent. The reference example 1 has a wheel shape generally used in Europe. The reference example 2 has a wheel shape generally used in North America.

The FEM analysis was conducted with general-purpose software (ABAQUS Ver.6.12, from Dassault Systemes SE). In the analysis, to simulate braking of a railway vehicle with a tread brake, heat flux was provided to a region of a tread of a wheel that is to come into contact with a brake shoe of the tread brake. Braking duration was set at 1200 seconds, and an inner circumferential portion of a wheel was fully constrained. In the analysis, the displacement amount of the rim in the axial direction and thermal stress in the web (web thermal stress) during braking of the railway vehicle were checked. Results of the analysis are shown in Table 1.

### [Table 1]

**TABLE 1**

| | Web Angle θ [°] | Web Position Pw/Rim Width Wr | Rim Root R [mm] | Displacement Amount [mm] | Web Thermal Stress (/Reference Example 2) |
|---|---|---|---|---|---|
| No.1 | 85 | 0.37 | 20 | 0.87 | 0.99 |
| No.2 | 87 | 0.19 | 20 | -0.32 | 0.92 |
| No.3 | 87 | 0.31 | 20 | 0.23 | 0.84 |
| No.4 | 87 | 0.33 | 20 | 0.29 | 0.81 |
| No.5 | 87 | 0.35 | 20 | 0.32 | 0.82 |
| No.6 | 87 | 0.37 | 20 | 0.34 | 0.83 |
| No.7 | 87 | 0.39 | 20 | 0.37 | 0.84 |
| No.8 | 87 | 0.47 | 5 | -0.95 | 0.89 |
| No.9 | 87 | 0.47 | 10 | -0.93 | 0.89 |
| No.10 | 87 | 0.47 | 20 | 1.10 | 0.86 |
| No.11 | 87 | 0.47 | 30 | 1.08 | 0.86 |
| No.12 | 87 | 0.47 | 40 | 1.06 | 0.84 |
| No.13 | 87 | 0.47 | 50 | 1.06 | 0.82 |
| No.14 | 88 | 0.37 | 20 | -0.20 | 0.87 |
| No.15 | 89 | 0.37 | 20 | -0.09 | 0.79 |
| No.16 | 90 | 0.37 | 20 | -0.45 | 0.72 |
| No.17 | 90 | 0.47 | 20 | 0.34 | 0.61 |
| Reference Example 1 | - | 0.49 | 40 | -0.20 | 1.55 |
| Reference Example 2 | - | 0.62 | 10 | 3.50 | 1.00 |

The displacement amount in Table 1 is a maximum displacement amount of the rim in the axial direction during braking, where a displacement in the flange direction is indicated as negative, and a displacement in the counter-flange direction is indicated as positive. The displacement amount of the rim was evaluated at a position at a diameter of 890 mm of a wheel on a side face of the rim on its flange side. Web thermal stress is maximum stress of the web during braking. In Table 1, for each of Nos. 1 to 17 and the reference examples, a web thermal stress is expressed in a form of its ratio to web thermal stress of the reference example 2.

### [Displacement of rim in axial direction]

As shown in Table 1, in each of Nos. 1 to 17, in which the plate-thickness center line of the web has a linear shape, the result was that the displacement amount of the rim in the axial direction during braking fell within a tolerated range according to European standards EN13979-1 (-1.0 mm to 3.0 mm).

In the wheel shape of the reference example 1, the plate-thickness center line of the web was provided with two inflection points for the purpose of suppressing displacement of the rim. Also in the reference example 1, the displacement amount of the rim in the axial direction during braking fell within the range of European standards.

In contrast, in the wheel shape of the reference example 2, the plate-thickness center line of the web was formed in a substantially S shape, thus causing a root of the web for the boss to be separated in the axial direction from a root of the web for the rim to reduce thermal stress in the web. The wheel shape of the reference example 2 is not a wheel shape formed by taking into account displacement of the rim. As a result, in the reference example 2, the displacement amount of the rim in the axial direction during braking fell outside the range of European standards, that is, the displacement amount of the rim in the axial direction was not reduced.

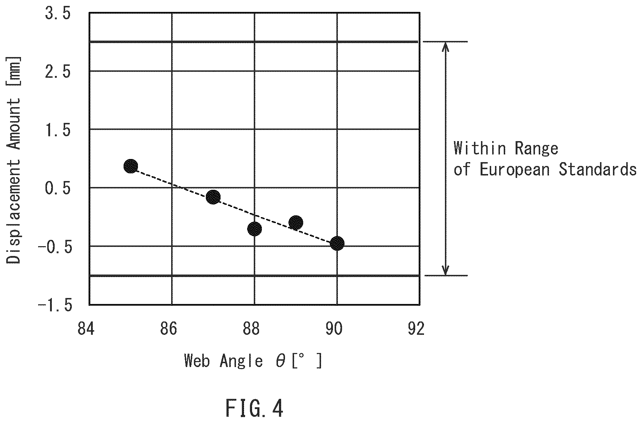

FIG. 4 is a graph illustrating the relationship between web angle θ and displacement amount of the rim in a case where web position Pw/rim width Wr and rim root R are constant. In FIG. 4, to illustrate an influence of web angle θ on displacement of the rim, the displacement amount of the rim corresponding to the web angle θ is plotted for each of Nos. 1, 6, and 14 to 16, in which web position Pw/rim width Wr is set to 0.37 and the rim root R is set to 20 mm, and an approximating curve is drawn based on these plots.

As illustrated in FIG. 4, in a case where the web angle θ is varied from 85° to 90°, the displacement amount of the rim is reduced more as the web angle θ increases. The displacement amount of the rim has a minimum value when the web angle θ = 90°. In the case where the web angle θ = 90°, although the displacement amount of the rim falls within the range of European standards, it is difficult to ensure rigidity of the wheel when the railway vehicle passes a curve. Therefore, from the viewpoint of reducing displacement of the rim in the axial direction while ensuring rigidity of the wheel when the railway vehicle passes a curve, the web angle θ is preferably less than 90°. The web angle θ is more preferably 89° or less. Further, based on the result of this analysis, it is possible to set the web angle θ to 85° or more.

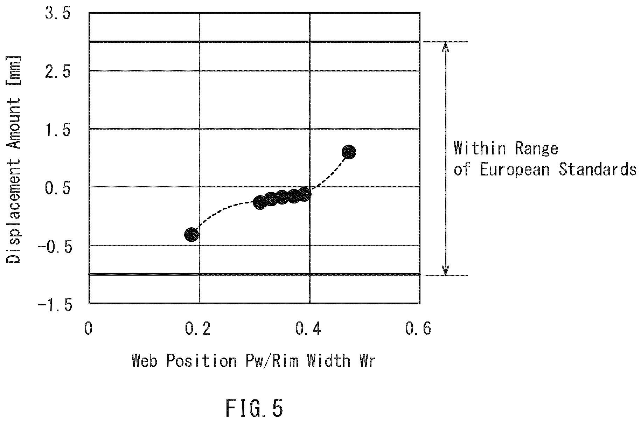

FIG. 5 is a graph illustrating the relationship between web position Pw/rim width Wr and displacement amount of the rim in a case where web angle θ and rim root R are constant. In FIG. 5, to illustrate an influence of web position Pw/rim width Wr on displacement of the rim, the displacement amount of the rim corresponding to web position Pw/rim width Wr is plotted for each of Nos. 2 to 7 and 10, in which the web angle θ is set to 87° and the rim root R is set to 20 mm, and an approximating curve is drawn based on these plots.

When web position Pw/rim width Wr is relatively small, it is possible to suppress displacement of the rim in the axial direction during braking. As illustrated in FIG. 5, it was confirmed that even when web position Pw/rim width Wr is varied from 0.19 to 0.47, the displacement amount of the rim falls within the range of European standards. Particularly, when web position Pw/rim width Wr was less than 0.40, the displacement amount of the rim was noticeably small.

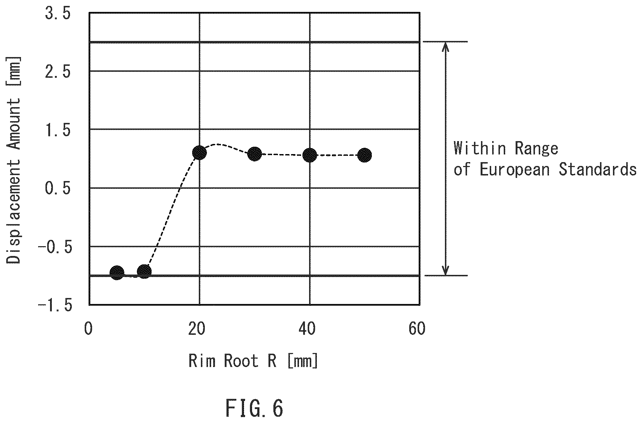

FIG. 6 is a graph illustrating the relationship between rim root R and displacement amount of the rim in a case where web position Pw/rim width Wr and web angle θ are constant. In FIG. 6, to illustrate an influence of rim root R on displacement of the rim, the displacement amount of the rim corresponding to the rim root R is plotted for each of Nos. 8 to 13, in which web position Pw/rim width Wr is set to 0.47 and the web angle θ is set to 87°, and an approximating curve is drawn based on these plots.

As illustrated in FIG. 6, even when the rim root R is varied from 5 mm to 50 mm, the displacement amount of the rim falls within the range of European standards. However, when the rim root R was less than 20 mm, the displacement amount of the rim was close to the lower limit value of the range of European standards. In contrast, when the rim root R was 20 mm or more, the displacement amount of the rim was close to the center value of the range of European standards. Therefore, the rim root R is preferably 20 mm or more.

### [Web thermal stress]

As described above, the wheel shape of the reference example 2 is a wheel shape adopted to reduce web thermal stress. Thus, in this analysis, the evaluation of the degree of reduction in web thermal stress was conducted by using the web thermal stress of the reference example 2 as the reference.

As shown in Table 1, in Nos. 1 to 17, the ratio of web thermal stress to that of the reference example 2 was less than 1.00, that is, web thermal stress was reduced. In Nos. 1 to 17, during braking of the railway vehicle, the displacement amount of the rim in the axial direction was reduced, and web thermal stress was also reduced.

In the reference example 1, the ratio of web thermal stress to that of the reference example 2 was more than 1.00, that is, web thermal stress was increased. In the case of the wheel shape of the reference example 1, during braking of the railway vehicle, although the displacement amount of the rim in the axial direction was reduced, web thermal stress was not reduced.

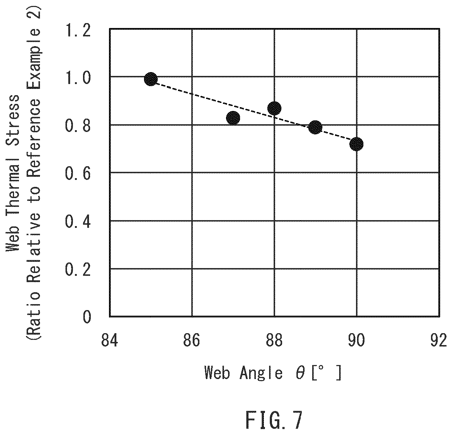

FIG. 7 is a graph illustrating the relationship between web angle θ and web thermal stress in a case where web position Pw/rim width Wr and rim root R are constant. In FIG. 7, to illustrate an influence of web angle θ on web thermal stress, the web thermal stress corresponding to the web angle θ is plotted for each of Nos. 1, 6, and 14 to 16, in which web position Pw/rim width Wr is set to 0.37 and the rim root R is set to 20 mm, and an approximating curve is drawn based on these plots.

As illustrated in FIG. 7, when the web angle θ is 85° or more, the web thermal stress is reduced as compared with the reference example 2. The web thermal stress is reduced more as the web angle θ increases. The web thermal stress is reduced the most when the web angle θ = 90°. However, when the web angle θ = 90°, as described above, it is difficult to ensure rigidity of the wheel when the railway vehicle passes a curve. From the viewpoint of reducing web thermal stress while ensuring rigidity of the wheel when the railway vehicle passes a curve, the web angle θ is preferably less than 90°. The web angle θ is more preferably 89° or less.

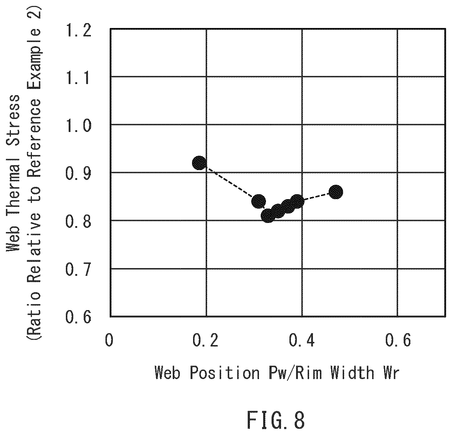

FIG. 8 is a graph illustrating the relationship between web position Pw/rim width Wr and web thermal stress in a case where web angle θ and rim root R are constant. In FIG. 8, to confirm an influence of web position Pw/rim width Wr on web thermal stress, the web thermal stress corresponding to web position Pw/rim width Wr is plotted for each of Nos. 2 to 7 and 10, in which the web angle θ is set to 87° and the rim root R is set to 20 mm, and an approximating curve is drawn based on these plots.

As illustrated in FIG. 8, when web position Pw/rim width Wr is less than 0.20, the web thermal stress is substantially equal to the web thermal stress of the reference example 2, thus an effect of reducing web thermal stress is small. In contrast, when web position Pw/rim width Wr is 0.30 or more, the web thermal stress is significantly reduced as compared with the reference example 2. However, when web position Pw/rim width Wr is 0.40 or more, an effect of reducing web thermal stress is slightly reduced. Therefore, to reduce web thermal stress, web position Pw/rim width Wr is preferably 0.30 or more and less than 0.40. However, the displacement amount of the rim is small when web position Pw/rim width Wr is small (FIG. 5) and hence, when both displacement of the rim and web thermal stress are taken into account, it is sufficient that web position Pw/rim width Wr be less than 0.40.

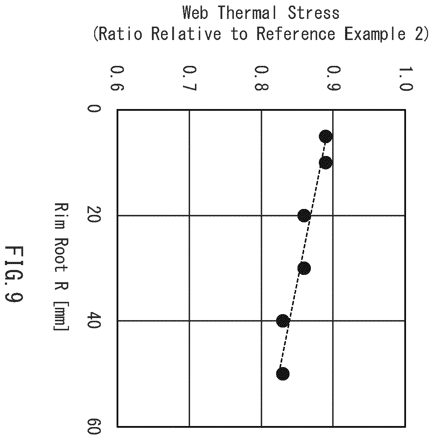

FIG. 9 is a graph illustrating the relationship between rim root R and web thermal stress in a case where web position Pw/rim width Wr and web angle θ are constant. In FIG. 9, to illustrate an influence of rim root R on web thermal stress, the web thermal stress corresponding to the rim root R is plotted for each of Nos. 8 to 13, in which web position Pw/rim width Wr is set to 0.47 and the web angle θ is set to 87°, and an approximating curve is drawn based on these plots.

As illustrated in FIG. 9, the web thermal stress is reduced more as the rim root R increases. Particularly, when the rim root R is 20 mm or more, the web thermal stress is significantly reduced as compared with the reference example 2. When the rim root R is 40 mm or more, the web thermal stress is further reduced. Therefore, also from the viewpoint of reducing web thermal stress in addition to displacement of the rim in the axial direction, the rim root R is preferably 20 mm or more. To further reduce web thermal stress, the rim root R is preferably set to 40 mm or more.

As in the case of the wheel according to the present disclosure, in a case where the rim-width center Cr is disposed on the flange direction side with respect to the boss-width center Cb and the plate-thickness center line of the web is inclined with respect to the radial direction toward the counter-flange direction as the plate-thickness center line extends from the inner peripheral side toward the outer peripheral side of the wheel, it is possible to achieve a large rim root R on the flange side. In contrast, in a case of a wheel in which the rim-width center Cr is disposed on the counter-flange direction side with respect to the boss-width center Cb and the plate-thickness center line of the web is inclined with respect to the radial direction toward the flange direction as the plate-thickness center line extends from the inner peripheral side toward the outer peripheral side of the wheel, it is difficult to increase the rim root R on the flange side to 40 mm or more, for example. This is because, in the case of such a wheel, an excessively large rim root R on the flange side remarkably reduces the degree of freedom in inclination angle of the web.

### REFERENCE SIGNS LIST

100: wheel
10: boss
20: rim
21: tread
22: flange
23, 24: side face
30: web
41: connecting part
A: plate-thickness center line
Aa: outer end

## Claims

1. A wheel for a railway vehicle, the wheel comprising:
a boss that forms an inner circumferential portion of the wheel and into which an axle of the railway vehicle is to be inserted;
a rim that forms an outer circumferential portion of the wheel, the rim including: a tread to come into contact with a top surface of a rail on which the railway vehicle travels; and a flange that is connected to one end of the tread in an axial direction of the wheel and protrudes outward from the tread in a radial direction of the wheel; and
a web that has an annular shape and connects the boss and the rim, wherein
a center of the rim in the axial direction is positioned on the flange side with respect to a center of the boss in the axial direction,
a plate-thickness center line of the web has a linear shape in cross section including a central axis of the wheel, and is inclined with respect to the radial direction in such a way as to be farther from the flange as the plate-thickness center line extends outward in the radial direction, and
when a distance in the axial direction from one side face of both side faces of the rim in the axial direction, whichever is farther from the flange than the other side face, to an outer end of the plate-thickness center line is taken as "Pw", the outer end being one end of both ends of the plate-thickness center line, whichever is positioned more outward from the other end in the radial direction, and a length of the rim in the axial direction is taken as "Wr", Pw/Wr is less than 0.40.

2. The wheel according to claim 1, wherein
Pw/Wr is 0.30 or more.

3. The wheel according to claim 1, wherein
an angle formed by the plate-thickness center line with the axial direction on a side opposite to the flange is 89° or less.

4. The wheel according to claim 3, wherein
the angle is 85° or more.

5. The wheel according to claim 1, wherein
a face of the web on the flange side is connected to a face of the rim via a connecting part having an arc shape in cross section including the central axis of the wheel, and
a curvature radius of the connecting part is 20 mm or more.

6. The wheel according to claim 1, wherein
the web has a minimum plate thickness at a position inward from the outer end of the plate-thickness center line in the radial direction, and
a plate thickness of the web decreases as the web extends outward in the radial direction until the position of the minimum plate thickness.
